# FASCICULE DE BREVET EUROPEEN

(11) **EP 4 601 793 B1**
(45) Date de publication et mention de la délivrance du brevet: **21.10.2026**
(21) Numéro de dépôt: 23786282.6
(22) Date de dépôt: 11.10.2023
(51) Int. Cl.: B02C 4/06, B02C 4/08, B02C 4/30, B02C 4/42, A21D 13/02, A21D 13/06

(54) **PROCEDE ET DISPOSITIF POUR MOUDRE DES GRAINS**
VERFAHREN UND VORRICHTUNG ZUM MAHLEN VON GETREIDE
METHOD AND DEVICE FOR GRINDING GRAINS

(30) Priorité: 14.10.2022 EP 22201661
(43) Date de publication de la demande: 20.08.2025
(73) Titulaire: Favre, Eric, 1040 St-Barthélemy (CH)
(72) Inventeur: Favre, Eric, 1040 St-Barthélemy (CH)
(74) Mandataire: reuteler & cie SA
(86) Numéro de dépôt international: PCT/EP2023/078245
(87) Numéro de publication internationale: WO 2024/079212

(56) Documents cités:
- WO-A1-2019/191809
- US-A- 2 202 892
- US-A1- 2014 252 141

## Description

La présente invention concerne un procédé pour moudre des grains de végétaux, notamment de céréales, par exemple pour la préparation du pain.

Dans des procédés pour moudre des grains de céréales afin de produire des farines pour la confection de pains, de pâtisseries et d'autres aliments préparés avec des farines de céréales, on utilise des meules qui réduisent les grains de céréales en petits morceaux par écrasement et frottements. Les effets de cisaillement et d'échauffement des particules de farine ont pour effet de causer la rupture et donc la mort d'une majorité des cellules à la surface de la particule. Dans beaucoup de procédés conventionnels, on sépare l'amidon du germe et du péricarpe. L'amidon moulu en fines particules forme la farine blanche et pour des farines complètes on ajoute une partie ou toutes les particules du péricarpe et de l'assise protéique et encore parfois du germe.

Comme la farine sera ensuite cuite pour produire du pain ou d'autres aliments contenant de la farine, il n'est pas considéré important de conserver l'intégrité des cellules à la surface des particules de farine. Au contraire, on considère que plus il y a de cellules vivantes, plus il y a de l'activité pouvant conduire à la réduction du temps de conservation des farines. Toutefois, le procédé d'échauffement des particules lors du procédé pour moudre les grains conduit aussi à la destruction de certains composés sensibles à la chaleur tels que des polyphénols. Il y a donc une certaine perte gustative des farines conventionnelles suite au procédé pour moudre les grains.

Dans le secteur des aliments, il y a un désir général et continu pour augmenter les qualités gustatives des produits, ainsi que d'autres facteurs tels que la durée de conservation et le bilan écologique. Le bilan écologique doit tenir compte du cycle entier commençant par la cultivation des grains jusqu'au produit de consommation final.

WO 2019/191809 A1 divulgue un dispositif d'émiettage avec un premier rouleau peigne et un deuxième rouleau peigne, le premier rouleau peigne comprenant une pluralité de rayons de dents et le deuxième rouleau peigne comprenant une pluralité de rayons de deuxièmes dents, les premiers et deuxièmes rayons de dents ayant des formes complémentaires et se chevauchant, une largeur d'une fente entre les dents des rouleaux étant plus grande que 0, le premier rouleau peigne et le deuxième rouleau peigne étant entraînés en rotation par des moteurs configurés pour entraîner les premières dents à une vitesse tangentielle plus grande qu'une vitesse tangentielle des deuxièmes dents.

Au vu de ce qui précède, un objet de l'invention est de fournir un dispositif et un procédé pour moudre des grains de céréales, ou d'autres végétaux en forme de grains tels que fèves de chocolat, grains de café, et grains de maïs, afin d'augmenter les qualités gustatives des produits tels que du pain produit en utilisant les farines de grains moulus.

Il est avantageux d'avoir une farine avec une longue durée de conservation.

Il est avantageux d'avoir un procédé et dispositif pour moudre des grains de végétaux, tels que des grains de céréales, qui sont écologiques.

Un autre objet de l'invention est de fournir du pain ayant une bonne qualité gustative.

Il est avantageux de fournir du pain avec un bilan écologique global favorable.

Des objets de l'invention sont réalisés par les revendications indépendantes. Les revendications dépendantes décrivent des caractéristiques avantageuses de l'invention. Dans la présente invention, on décrit une machine pour moudre des grains de végétaux, tels que des grains de céréales, comprenant une pluralité de dispositifs d'émiettage, chaque dispositif d'émiettage comprenant un premier rouleau peigne tournant autour d'un premier axe de rotation et un deuxième rouleau peigne tournant autour d'un deuxième axe de rotation le premier rouleau peigne comprenant une pluralité de rayons de premières dents faisant le tour de l'axe de rotation et le deuxième rouleau peigne comprenant une pluralité de rayons de deuxièmes dents faisant le tour du deuxième axe de rotation, les premières et deuxièmes rayons de dents ayant des formes complémentaires et se chevauchant, une largeur ***W*** d'une fente entre les dents des rouleaux étant plus grande que 0, le premier rouleau peigne et le deuxième rouleau peigne étant entrainés en rotation par un ou plusieurs moteurs configurés pour entrainer les premières dents à une vitesse tangentielle ***V1*** plus grande qu'une vitesse tangentielle ***V2*** des deuxièmes dents, le ou les dispositif(s) d'émiettage en amont ayant une largeur de fente W entre rouleaux plus grande que le ou les dispositif(s) d'émiettage en aval.

Dans une forme d'exécution avantageuse, les premières dents ont une forme effilée, vue en section selon un plan radial, avec un angle de la forme effilée (***α***) dans une gamme de 15 degrés à 45 degrés.

Dans une forme d'exécution avantageuse, le sommet des dents a une forme arrondie.

Dans une forme d'exécution avantageuse, une longueur tangentielle T1 des premières dents entre un bord d'attaque et un bord de fuite est plus grand qu'une longueur tangentielle T2 des deuxièmes dents entre un bord d'attaque et un bord de fuite.

Dans une forme d'exécution avantageuse, le rapport de longueur tangentielle ***T2*/*T1*** des deuxièmes dents par rapport aux premières dents est dans une gamme entre 0,2 et 0,8.

Dans une forme d'exécution avantageuse, le premier rouleau peigne est configuré pour tourner à une vitesse tangentielle ***V1*** entre 1 et 5 fois la vitesse tangentielle ***V2*** du deuxième rouleau peigne.

Dans une forme d'exécution avantageuse, la première dent du premier rouleau peigne comprend un bord d'attaque incliné par rapport à un radial passant par la base du bord d'attaque dans le sens de rotation du premier rouleau peigne.

Dans une forme d'exécution avantageuse, l'angle d'inclinaison ***β1*** du bord d'attaque par rapport au radial du premier rouleau est entre 5 degrés et 45 degrés, de préférence entre 10 degrés et 35 degrés.

Dans une forme d'exécution avantageuse, la deuxième dent du deuxième rouleau peigne comprend un bord de fuite incliné par rapport à un radial passant par la base du bord de fuite dans le sens de rotation du deuxième rouleau peigne.

Dans une forme d'exécution avantageuse, l'angle d'inclinaison ***φ2*** du bord de fuite par rapport au radial du deuxième rouleau est entre 0 degrés et 40 degrés, de préférence entre 5 degrés et 30 degrés.

Dans une forme d'exécution avantageuse, la machine comprend un mécanisme d'ajustement de la distance entre le premier axe de rotation A1 et le deuxième axe de rotation A2 de sorte à ajuster la largeur de la fente ***W*** entre les premiers et deuxièmes rouleaux.

Dans une forme d'exécution avantageuse, la machine comprend une pluralité de dispositifs d'émiettage, les dispositifs d'émiettage en amont ayant une largeur de fente ***W*** entre rouleaux plus grande que des dispositifs d'émiettage en aval.

Dans une forme d'exécution avantageuse, la machine comprend une pluralité de dispositifs d'émiettage et des dispositifs de convoyage configurés pour transporter des miettes de grains entre dispositifs d'émiettage, ainsi que du dernier dispositif d'émiettage et une sortie de la machine.

Dans une forme d'exécution avantageuse, la machine comprend une cabine et une source de gaz neutre tel que de l'azote connecté à la cabine la remplissant de gaz neutre, les dispositifs d'émiettage étant disposés dans la cabine.

Dans une forme d'exécution avantageuse, la cabine est fermée hermétiquement de sorte à pouvoir avoir une sous-pression à l'intérieur de la cabine.

Dans une forme d'exécution avantageuse, la machine comprend un dispositif d'alimentation à l'entrée de la machine, le dispositif d'alimentation comprenant un répartiteur doseur comprenant un rouleau de distribution avec des cannelures, le rouleau de distribution entrainé en rotation par un moteur de la machine.

Dans une forme d'exécution avantageuse, la machine comprend au moins un dispositif de séchage, par exemple un dispositif de séchage par chaleur de rayonnement et/ou par ventilation des miettes de grains, disposé entre deux dispositifs d'émiettage.

Dans la présente invention, on décrit aussi un procédé pour moudre des grains de végétaux tels que des céréales, selon la revendication 13.

Dans une forme d'exécution avantageuse, on utilise une machine selon l'une des formes d'exécutions décrites ci-dessus pour émietter les grains.

D'autres buts et aspects avantageux de l'invention apparaîtront à la lecture des revendications et/ou de la description détaillée ci-après de formes d'exécution de l'invention en relation avec les figures, dans lesquelles :
La Fig. 1 est une vue schématique en perspective d'un dispositif pour moudre des grains selon une forme d'exécution de l'invention, avec une paroi de cabine enlevée pour voir l'intérieur;
La Fig. 2 est une vue schématique d'une partie de la machine de la Fig. 1 montrant un dispositif d'alimentation et un dispositif d'émiettage ;
La Fig. 3 est une vue en perspective du dispositif de la Fig. 2 et d'un dispositif de convoyage et un dispositif de séchage ;

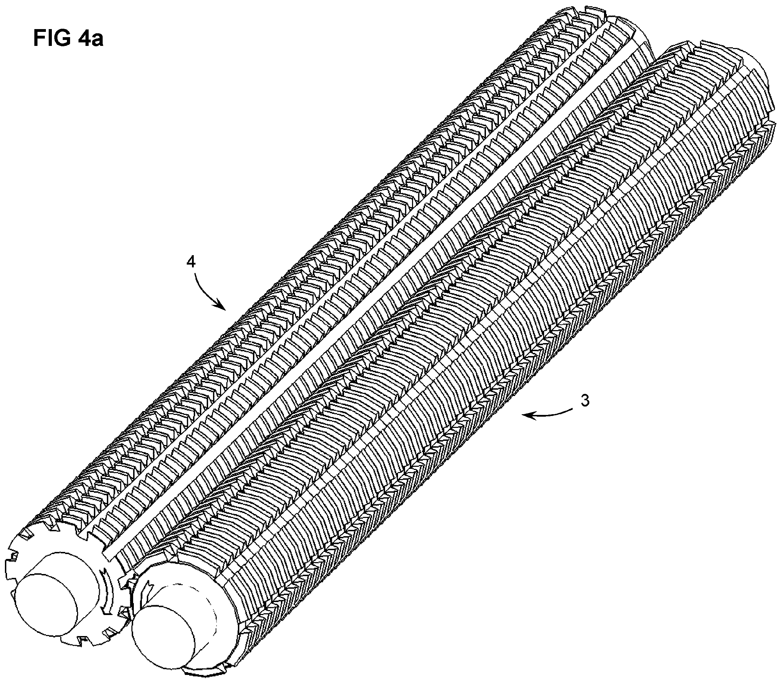

La Fig. 4a est une vue schématique en perspective d'un premier rouleau peigne et d'un deuxième rouleau peigne du dispositif d'émiettage selon une forme d'exécution de l'invention ;

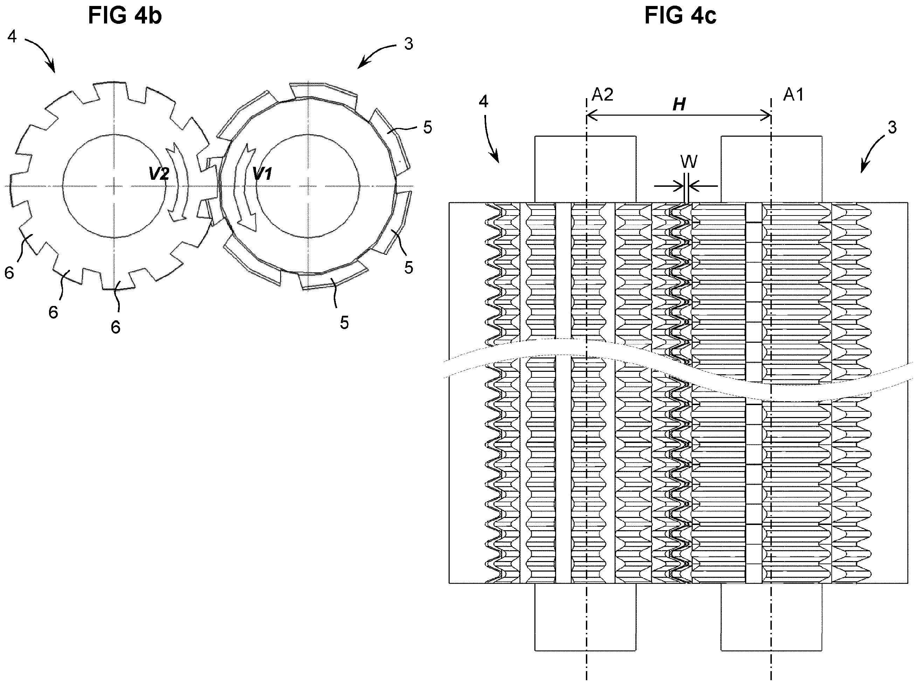

La Fig. 4b est une vue dans la direction des axes de rotation des premiers et deuxièmes rouleaux ;
La Fig. 4c est une vue de dessus des premiers et deuxièmes rouleaux de la Fig. 4a ;

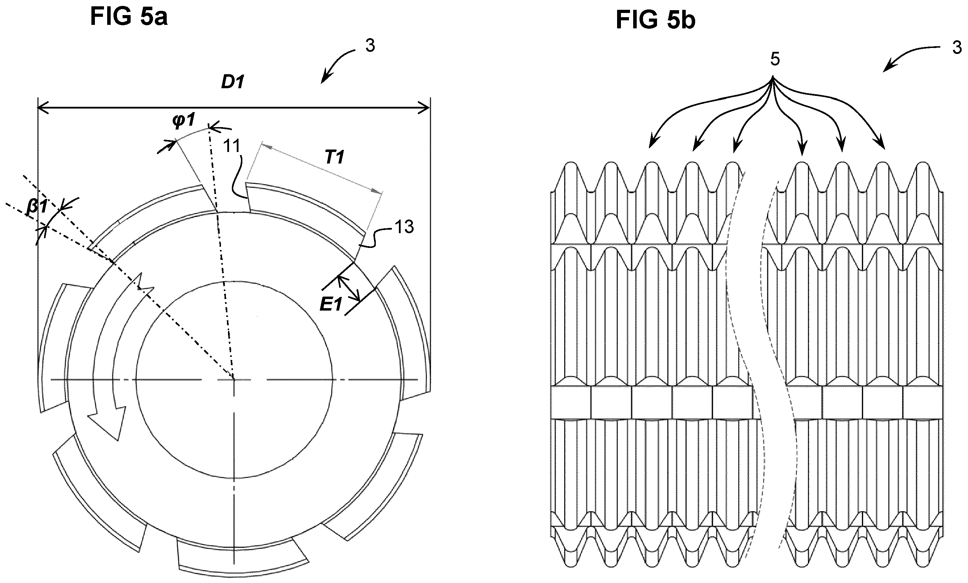

La Fig. 5a est une vue dans la direction de l'axe de rotation du premier rouleau peigne ;
La Fig. 5b est une vue de dessus du premier rouleau de la Fig. 5a ;

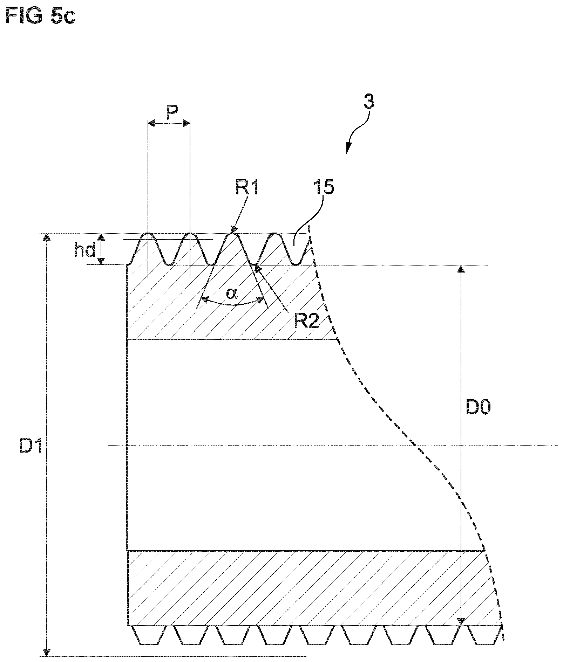

La Fig. 5c est une vue en coupe du premier rouleau des Fig. 5a et 5b ;

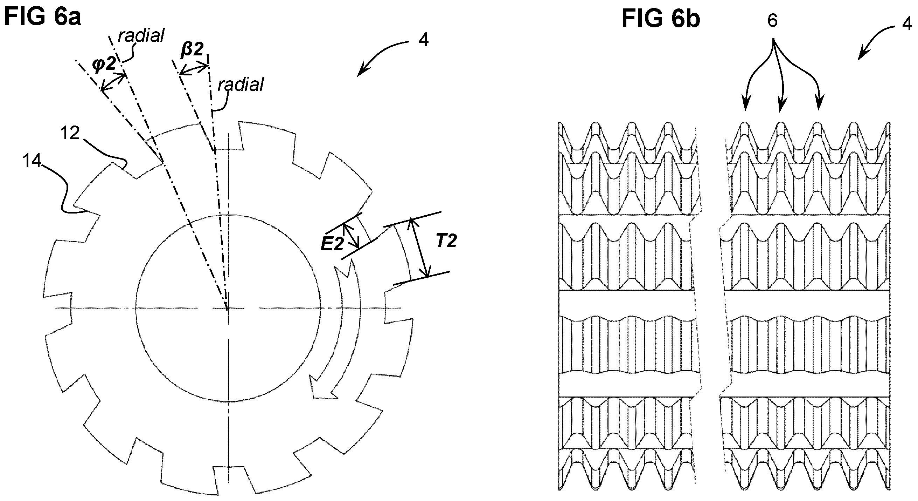

La Fig. 6a est une vue dans la direction de l'axe de rotation du deuxième rouleau peigne ;
La Fig. 6b est une vue de dessus du deuxième rouleau de la Fig. 6a ;

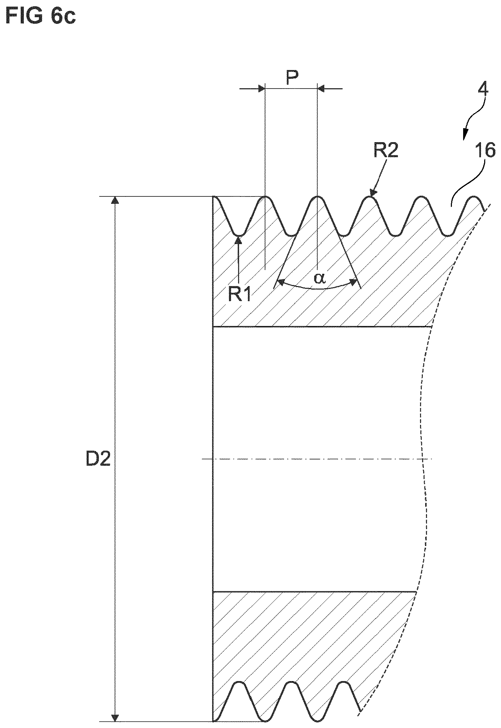

La Fig. 6c est une vue en coupe du deuxième rouleau des Fig. 6a et 6b ;
La Fig. 7a est une photographie de miettes de céréale obtenue par un procédé et un dispositif selon l'invention ;
La Fig. 7b est une vue photographie de tranches de pain fabriqué en utilisant une farine de miettes obtenue par un procédé et un dispositif selon l'invention ;
La Fig. 8 est une vue schématique connue de la structure d'un grain de céréale, dans ce cas du blé.

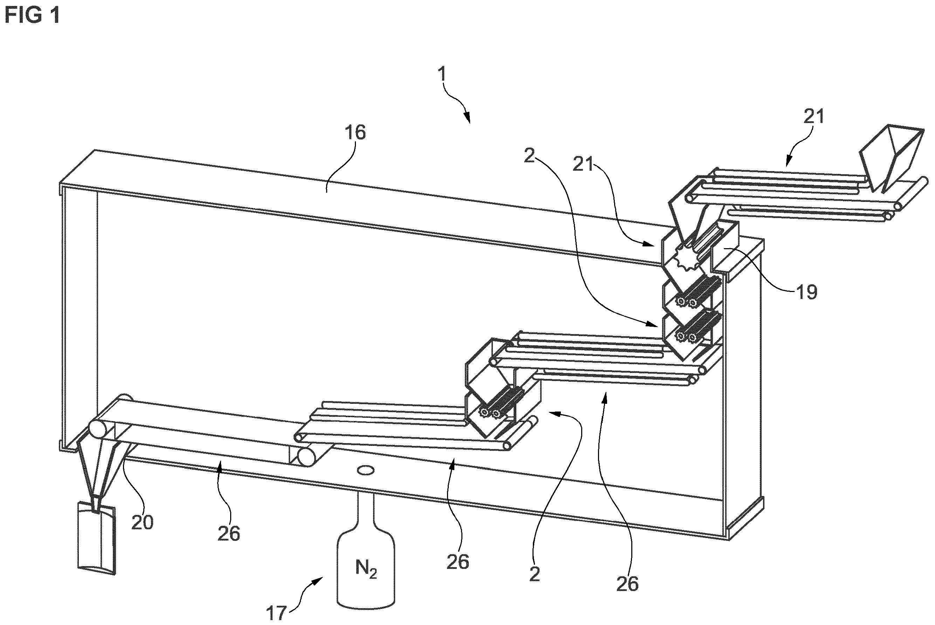

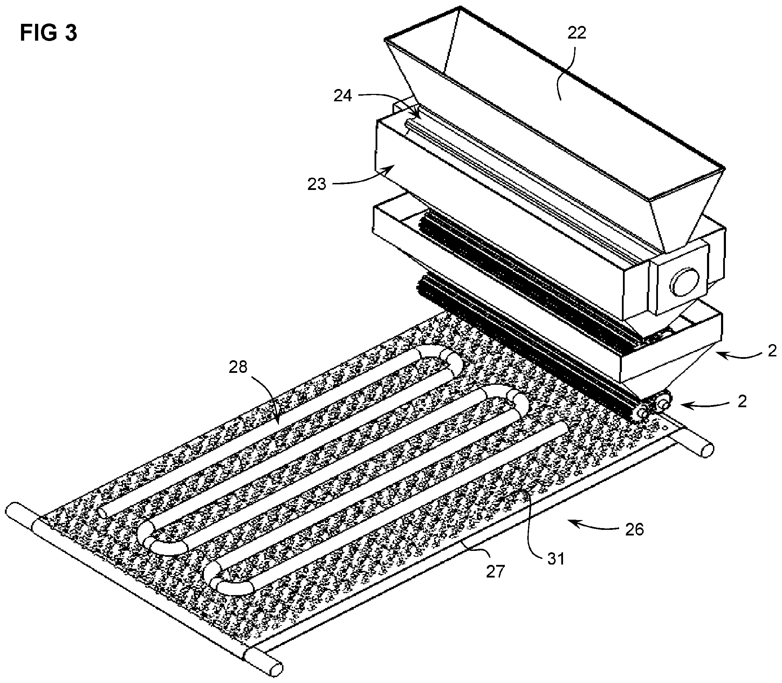

Faisant référence aux figures, commençant par les Fig. 1 à 3, une machine pour moudre des grains 1 comprend une pluralité de dispositifs d'émiettage 2 monté dans une cabine 16 ayant une entrée 19 et une sortie 20. La machine pour moudre peut comprendre en outre une source de gaz neutre, par exemple une source d'azote 17 connectée à la cabine 16 configurée pour remplir la cabine avec le gaz neutre afin d'éviter ou de limiter l'oxydation des grains émiettés se trouvant dans la machine. La sortie 20 peut comprendre un canal ou conduit connecté directement à un container, sac ou autre forme de récipient dans lequel la farine de miettes sortant de la machine est collectée en restant entourée du gaz neutre, afin de préserver la farine enfermée dans les containers à la fin du processus de remplissage.

La machine pour moudre comprend aussi des dispositifs de convoyage 26 pour transporter les miettes de grains de l'entrée19 à la sortie 20 en passant par un ou plusieurs dispositifs d'émiettage 2. Le dispositif de convoyage 26 peut comprendre un ou plusieurs tapis roulants ou vibrants, ou plateaux vibrants, de tels dispositifs de convoyage étant en soi connus.

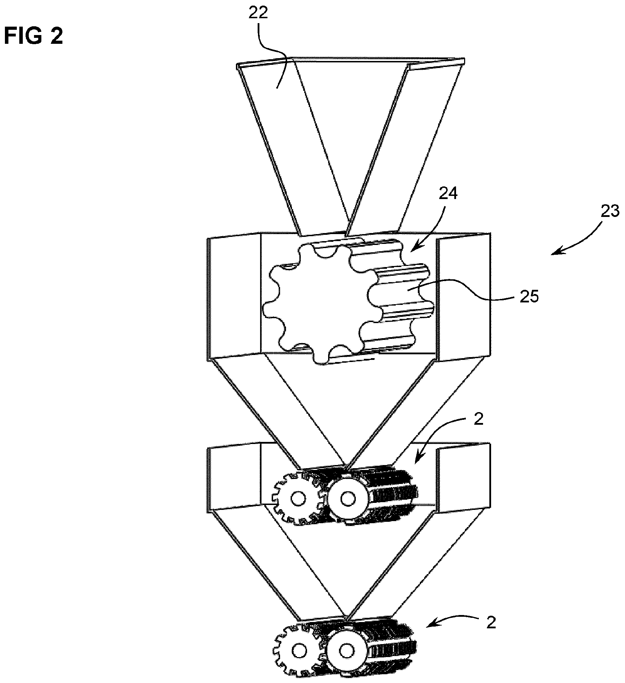

La machine 1 comprend plusieurs dispositifs d'émiettage 2 afin de réduire la taille des miettes en étapes. Les dispositifs d'émiettage peuvent être placés l'un au-dessus de l'autre comme illustré dans la Fig. 2, où encore séparés par un dispositif de convoyage 26 comme illustré à la Fig. 1.

Le dispositif d'alimentation 21 à l'entrée 19 de la cabine 16 comprend un répartiteur doseur 23 permettant de doser la quantité de grains introduite dans le premier dispositif d'émiettage de la machine. Le répartiteur doseur 23 peut être positionné sous un entonnoir 22 pour guider les grains vers le répartiteur doseur 23. Dans l'exemple illustré, le répartiteur doseur 23 comprend un rouleau de distribution 24 comprenant des cannelures 25 ayant une largeur et profondeur adaptées pour la taille et le type de grains à moudre par la machine. Les cannelures 25 limitent la quantité de grains qui sera versée dans le premier dispositif d'émiettage 2 lorsque le rouleau de distribution tourne, la vitesse de rotation du rouleau de distribution 24 étant également contrôlée pour adapter la quantité de grains fournie dans le temps au dispositif d'émiettage. En amont du répartiteur doseur 23 et de l'entonnoir 22 il peut y avoir un dispositif de convoyage amenant les grains de céréales depuis une source de céréales.

La machine pour moudre 1 peut aussi comprendre un ou plusieurs dispositifs de séchage 28 configurés pour sécher les miettes de grains, notamment lors du transport des miettes par le dispositif de convoyage 26. Le séchage des miettes de grains peut être effectué entre deux dispositifs d'émiettage 2 et/ou encore entre le dernier dispositif d'émiettage et la sortie 20. Le dernier dispositif d'émiettage peut aussi être configuré pour la torréfaction des miettes avant leur conditionnement dans les récipients à la sortie 20 de la machine.

Le dispositif d'émiettage 2 comprend un premier rouleau peigne 3 et un deuxième rouleau peigne 4. Le premier rouleau peigne 3 tourne autour d'un axe de rotation A1 et est entrainé par un moteur (non illustré) configuré pour tourner le premier rouleau peigne à une vitesse de rotation V1 qui peut être variée selon le type de grains et le débit voulu. De manière similaire, le deuxième rouleau peigne 4 est monté de manière rotative autour d'un axe de rotation A2 parallèle au premier axe de rotation A1 et couplé à un deuxième moteur avec une vitesse de rotation V2 qui peut être variable et contrôlée indépendamment de la vitesse de rotation V1 du premier rouleau peigne 3. Dans certaines formes d'exécution il est également envisageable d'avoir un seul moteur de rotation couplé au deux rouleaux d'émiettage par une transmission ayant un rapport fixe ou variable de sorte à soit avoir une vitesse du premier rouleau différent de la vitesse du deuxième rouleau.

Le premier rouleau peigne 3 comprend une pluralité de rayons de premières dents 5 disposées circulairement autour de l'axe de rotation A1. Les rayons adjacents de premières dents sont séparés par une distance de pas P. Le deuxième rouleau peigne 4 comprend aussi une pluralité rayons de deuxièmes dents 6 disposés autour de l'axe de rotation A2, séparés également entre rayons adjacents par un pas ***P*.** La forme des premières dents et creux entre-dents ainsi que la forme des deuxièmes dents et creux entre-dents sont complémentaires de sorte que les premières dents et les deuxièmes dents peuvent se chevaucher / s'emboiter.

Les premières dents et deuxièmes dents ont chacune une forme effilée avec un sommet arrondi, complémentaire à une forme évasée avec un creux arrondi 15 et 16 de l'espace latéral entre-dents. La forme effilée, prise en coupe orthogonale à l'axe de rotation, a un angle ***α*** de préférence entre 15 degrés et 55 degrés (***15*° *< α < 55°***)*.*

Le rayon de l'arrondi ***R1*** et ***R2*** sont complémentaires de préférence entre 0,5 mm et 2 mm (**0,5 *mm < R1 < 2 mm et 0.5 mm < R2 < 2 mm***)***.***

Dans l'exemple illustré, le diamètre maximum ***D1*** du premier rouleau est identique ou proche au diamètre maximum ***D2*** du deuxième rouleau, toutefois il est envisageable d'avoir le diamètre du premier rouleau ***D1*** différent du diamètre du deuxième rouleau ***D2.***

La machine comprend un système d'ajustement (non illustré) du support des premiers et deuxièmes rouleaux du dispositif d'émiettage pour ajuster la distance entre les axes de rotation ***H*** et ainsi ajuster la largeur de la fente ***W*** entre rouleaux correspondant donc à la largeur de la fente entre les dents des rouleaux.

Lorsque la machine comprend plusieurs dispositifs d'émiettage 2, la largeur de la fente ***W*** entre rouleaux du dispositif d'émiettage en aval est réglé de sorte à être plus faible que la largeur de la fente ***W*** entre rouleaux du dispositif d'émiettage situé en amont. Les dispositifs d'émiettage successifs réduisent donc la taille des miettes de farine produites.

Les premières dents faisant le pourtour du premier rouleau peigne 3 s'étendent chacune sur un secteur circulaire entre un bord d'attaque 11 et un bord de fuite 13 ayant une longueur tangentielle ***T1**.* Les premières dents sont séparées entre eux par un secteur circulaire d'espacement ayant une longueur tangentielle E1. La longueur de l'espacement est de préférence plus faible que la longueur de la dent T1 *> **E1**.*

Pour un premier rouleau avec un diamètre ***D1*** d'environ 4 à 20 cm, la longueur tangentielle T1 de la première dent serait par exemple de l'ordre de 1 à 6 cm. La longueur de la première dent T1 ainsi que la longueur d'espacement ***E1*** des premières dents peuvent être différents de la longueur tangentielle T2 de la deuxième dent du deuxième rouleau respectivement de la longueur tangentielle E2 d'espacement entre les deuxièmes dents du deuxième rouleau.

Dans une forme d'exécution avantageuse, la longueur tangentielle ***T2*** des deuxièmes dents du deuxième rouleau est plus faible que longueur tangentielle ***T1*** des premières dents du premier rouleau ***T1** > **T2**.* De préférence, le rapport ***T2*/*T1*** entre la longueur tangentielle ***T2*** des deuxièmes dents est la longueur tangentielle ***T1*** des premières dents est entre 0,2 à 0,8 (***0,2 < T1*/*T2 < 0.8***)*.*

Le bord d'attaque 11 des premières dents 5 est incliné, dans le sens de rotation, par rapport à un radial passant par le point de rayon minimum du bord d'attaque (i.e. à la base de la dent). L'angle ***β1*** du bord d'attaque par rapport au radial (du premier rouleau) est dans une forme d'exécution entre 5 et 45 degrés (***5°** <* ***β1* < 45°**), de préférence entre 10 et 35 degrés (***10° < β1 < 35°***)*.*

Le bord de fuite 13 des deuxièmes dents 5 est incliné, dans le sens de rotation, par rapport à un radial passant par le point de rayon minimum du bord de fuite (i.e. à la base de la dent). L'angle ***φ2*** du bord de fuite par rapport au radial (du premier rouleau) est dans une forme d'exécution entre 0 et 40 degrés (***0° < φ2< 40°***)*,* de préférence entre 5 et 30 degrés (**5°** *< **φ2< 30°***)*.*

Le premier rouleau est entrainé en rotation à une vitesse de rotation ***Vr1*** resultant dans une vitesse tangentielle ***V1*** des premières dents plus grande que la vitesse tangentielle ***V2*** des deuxièmes dents du deuxième rouleau entrainé à une vitesse de rotation ***Vr2,*** avec la conséquence que les bords d'attaque 11 des premières dents pincent les grains de céréales contre le bord de fuite 14 des deuxièmes dents tenant compte de l'espace de largeur ***W*** de la fente entre rouleaux 3, 4. Une graine coincée entre le bord d'attaque 11 d'une première dent 5 et le bord de fuite 14 d'une deuxième dent 6, est soumise à une force de cisaillement et de pliage et traction. Ces forces qui déchire la graine en raison de la configuration des dents et de l'espacement, a un effet de séparer des parties de grains en morceaux en laissant une majorité des cellules à la surface de la rupture intactes du fait qu'il n'y a pas de frottement direct contre une grande partie de la surface de rupture. On ne peut éviter que certaines cellules subissent une rupture par cisaillement et frottement, notamment les parties en contact direct avec les dents, toutefois une grande partie de la surface de rupture n'entre pas en contact avec les dents, en tous cas avec une force de frottement et d'écrasement bien plus faible que dans des systèmes de meules traditionnelles, de sorte à conserver l'intégrité d'une bonne partie des cellules se trouvant dans la surface déchirée.

Lorsque les grains sont émiettés dans une première phase, il est avantageux de sécher ces miettes afin d'améliorer la qualité de la rupture dans une phase subséquente d'émiettage pour produire des miettes plus petites. Le procédé de séchage peut être effectué par le dispositif de séchage 28 disposé le long du dispositif de convoyage 26 entre deux dispositifs d'émiettage 2. Le dispositif de séchage peut par exemple comprendre un corps de chauffe rayonnant et/ou un souffle de gaz sec et/ou chaud à travers les miettes de grains.

Dans une forme d'exécution, la cabine 16 peut être fermée hermétiquement de sorte à pouvoir avoir une sous-pression à l'intérieur de la cabine. Cette sous-pression peut être avantageuse pour sécher les miettes plus rapidement.

La rotation des deux rouleaux 3, 4, de sorte à avoir une composante de vitesse tangentielle à l'interface entre les rouleaux vers le bas, permet d'assurer que les grains ou miettes en amont passent à travers l'interface entre le premier rouleau peigne 3 et le deuxième rouleau peigne 4. On évite ainsi que les grains et miettes s'accumulent au-dessus des rouleaux.

L'angle ***φ1*** et la forme du bord de fuite 14 des premières dents (du premier rouleau) et l'angle ***β2*** et la forme du bord d'attaque 12 des deuxièmes dents (du deuxième rouleau) est de moindre importance que le bord d'attaque des premières dents et le bord de fuite des deuxièmes dents. Dans des formes d'exécution, les angles du bord de fuite 14 des premières dents et du bord d'attaque 12 des deuxièmes dents peuvent varier, dans le sens de rotation, par exemple entre 0° et 40° (***0°< φ1<40°*** et ***0°< β2<40°***), par rapport au radial passant par la base du bord en question.

Comme le premier rouleau tourne plus vite que le deuxième rouleau, il y a un avantage à ce que la longueur tangentielle ***T2*** du secteur circulaire des dents du deuxième rouleau soit plus faible que la longueur tangentielle ***T1*** du secteur circulaire des dents du premier rouleau. Cela permet d'assurer que les bords d'attaque 11 des premières dents croisent les bords de fuite 14 des deuxièmes dents et coincent les grains pour les rupturer.

La hauteur radiale ***hd*** des premières et deuxièmes dents, dans une forme d'exécution, notamment pour moudre des grains de céréales, est dans un ordre de grandeur de 2 mm à 20 mm (***2 mm < hd < 20 mm***), de préférence dans un ordre de grandeur de 3 mm à 10 mm (***3 mm < hd < 10 mm***)*.*

Lors de l'émiettage, les grains ou les miettes de grains sont retenues par les bords de fuite 14 du deuxième rouleau peigne 4 puisque ce deuxième rouleau tourne plus lentement que le premier rouleau alors que les dents du premier rouleau viennent accrocher les grains et miettes lors du passage par le bord de fuite pour causer la rupture des grains et des miettes. Les grains et miettes entrainées par le premier rouleau 3 sont projetées sur le deuxième rouleau 4 et ensuite accrochées par des dents subséquentes lors de la rotation du premier rouleau qui va plus vite que le deuxième rouleau.

La machine pour moudre peut comprendre en outre un dispositif pour séparer des miettes de tailles différentes par un dispositif de tamis vibrant avec une grille retenant des miettes d'une certaine taille et laissant passer un système de convoyage ou de réception en dessous de plus faible taille. La séparation de tailles de miettes peut permettre un meilleur contrôle de dosage des farines de miettes et de composition pour la production subséquente de pains ou d'autres aliments basés sur la farine.

Le tableau ci-après résume les plages de valeurs préférentielles des paramètres pour des formes d'exécution de l'invention :

| ***Paramètre*** | ***Plage max*** | ***Plage préférentielle*** | ***plage optimale*** |
|---|---|---|---|
| Distance latérale entre dents (pas) ***P*** | 2mm-20mm | 3mm - 15mm | 4mm - 10mm |
| Angle de la forme effilée des dents ***α*** | 15° - 45° | | |
| Largeur de la fente entre rouleaux (entre les dents des rouleaux) ***W*** | 0,09mm-5mm selon la taille des grains et miettes et position du dispositif d'émiettage | | |
| Diamètre du premier rouleau ***D1*** | 3cm-40cm | 4cm - 30cm | 4,5cm - 7cm |
| Diamètre du deuxième rouleau ***D2*** | 3cm-40cm | 4cm - 30cm | 4,5cm - 7cm |
| Angle de la forme effilée des dents ***α*** | 15°-55° | 25°-50° | 35° - 50° |
| Rayon de l'arrondi du sommet ***R1*** | 0.5mm-2mm | | |
| Rayon de l'arrondi du sommet ***R2*** | 0.5mm-2mm | | |
| Angle du bord d'attaque (par rapport au radial) du premier rouleau ***β1*** | 5°- 45° | 10°- 35° | 15°- 30° |
| Angle du bord de fuite (par rapport au radial) du premier rouleau ***φ1*** | 0°- 40° | | |
| Angle du bord d'attaque (par rapport au radial) du deuxième rouleau ***β2*** | 0°- 40° | | |
| Angle du bord de fuite (par rapport au radial) du deuxième rouleau ***φ2*** | 0°- 40° | 5°- 30° | 10°-20 ° |
| Longueur tangentielle d'une dent du premier rouleau ***T1*** | 0,5cm - 10cm | 1cm - 6cm | 1,5cm - 2,5cm |
| Longueur tangentielle de l'espace entre dents du premier rouleau ***E1*** | 1mm - 20mm | 3mm - 10mm | 4mm - 8mm |
| Rapport de longueur tangentielle ***T2*/*T1*** | 0,1 - 1 | 0,2 - 0,8 | 0,4 - 0,8 |
| Longueur tangentielle de l'espace entre dents du deuxième rouleau ***E2*** | 1mm - 20mm | 3mm - 10mm | 4mm - 8mm |
| Hauteur radiale ***hd*** des premières et deuxièmes dents | 2mm - 20mm | 3mm - 10mm | 4mm - 6mm |
| Vitesse tangentielle des dents du premier rouleau ***V1*** | 0.04m/s-7m/s | 0.1 m/s-5m/s | 0.1m/s-4m/s |
| Rapport de vitesses ***V1*/*V2*** | 1 - 5 | 1.5 - 5 | 1.5 - 4 |

Avantageusement, comme les miettes de grains moulus selon l'invention ont une proportion de cellules vivantes à la surface des miettes qui est plus importante que dans des procédés conventionnels où le frottement et l'écrasement ainsi que le chauffage de la surface frottée détruisent la majorité des cellules, les miettes de grains produites selon le procédé de l'invention peuvent absorber plus d'eau. En effet, les cellules vivantes peuvent accumuler et retenir plus d'eau que les cellules mortes.

Lors de la fabrication de pâtes et notamment pour la pâte de pain, les miettes de grains moulus par un procédé selon l'invention sont d'abord mouillées afin d'augmenter la teneur en eau de la farine de miettes et ensuite bouillies afin de tuer les cellules lorsqu'elles sont saturées d'eau. On peut ensuite mélanger la farine de miettes ébouillantée avec des farines conventionnelles par exemple de la farine blanche dont la teneur en amidon et gluten permet de lier la pâte.

Il est avantageux de fabriquer un pain avec une farine de miettes de grains de céréales produite selon l'invention en la mélangant avec une farine blanche de boulanger dans un rapport du poids sec de 5 à 50 % de farine de miettes. Une farine blanche de blé pour du pain à les caractéristiques typiques suivantes: particules de taille moyenne d'environ 90 à 100 microns, taux d'humidité typique d'environ 14,5 max % .

En ayant une proportion de farine de miettes de grains de céréales fabriquée selon le procédé de l'invention dans les proportions indiquées, on améliore les qualités gustatives du pain ainsi que sa durée de conservation.

Les miettes de grains de céréales telles que les grains de blé, de seigle, d'épeautre, d'orge, d'avoine, sont avantageusement préparées par ébouillantage dans une eau à environ 90°C et elles absorbent beaucoup plus d'eau que les farines traditionnelles d'amidon.

Ainsi, elles gonflent d'avantage et l'oxygène libéré capte les différents polyphénols et autres arômes. Par exemple, lors de la cuisson d'un pain composé d'une quantité plus ou moins grande de cette farine émiettée selon des formes d'exécution de l'invention, les cellules encore vivantes sont neutralisées et le pain obtenu est plus aromatisé naturellement, plus lourd et se conserve beaucoup plus longtemps.

Plus la quantité de farine émiettée est grande dans la pâte, moins il est nécessaire d'ajouter du sel et meilleure sera le pain pour la santé du consommateur.

### Exemple de pain de seigle

| | |
|---|---|
| Un pain - une Pâte | 400gr |
| ./. Perte de poids pendant la cuisson | 72gr |
| Poids final du Pain de seigle | 328gr |

### Composition :

| | |
|---|---|
| Farine mi-blanche (amidon) | 84% |
| Farine émiettée selon l'invention | 16% |
| Eau dissoute dans la farine d'amidon | 40% |
| Eau dissoute dans la farine émiettée | 62.5% |

La farine de seigle émiettée est très avantageuse pour le boulanger, car le pain est plus lourd (d'avantage d'eau) pour la même quantité de farine.

### Exemple de pain d'épeautre ou de blé dur

| | |
|---|---|
| Un pain - une Pâte | 400gr |
| ./. Perte de poids pendant la cuisson | 72gr |
| Poids final du Pain d'épeautre | 328gr |

ou de blé dur

### Composition:

| | |
|---|---|
| Farine mi-blanche (amidon) | 77% |
| Farine émiettée selon l'invention | 23% |
| Eau dissoute dans la farine d'amidon | 40% |
| Eau dissoute dans la farine émiettée | 62.5% |

Comme pour la farine de seigle émiettée, les farines d'épeautre et de blé dur sont également avantageuses.

Dans ces deux exemples, le pain est d'une longueur de 20 à 30cm, d'une largeur de 7 à 10cm et d'une hauteur de 8 à 10cm. Les alvéoles de la mie du pain sont de 2 à 5mm et sont entières. Sous l'effet de la pression, elles gardent toutes leurs formes initiales. La croûte du pain a été durcie par la cuisson et est de rugosité moyenne, mais résistante à la pression. Les pains peuvent donc être entassés sans déformation. Si la pâte est recouverte par des miettes d'épeautre, la croûte supérieure du pain se déchire à la cuisson pour donner un aspect frais. La croûte du pain est croustillante et protège la mie intérieure, très aromatique, sans aucun additif.

Comme la mie du pain avec de la farine émietté selon l'invention est plus humide (quantité d'eau absorbée par les miettes de céréales), cette dernière reprend rapidement sa forme initiale avant pression.

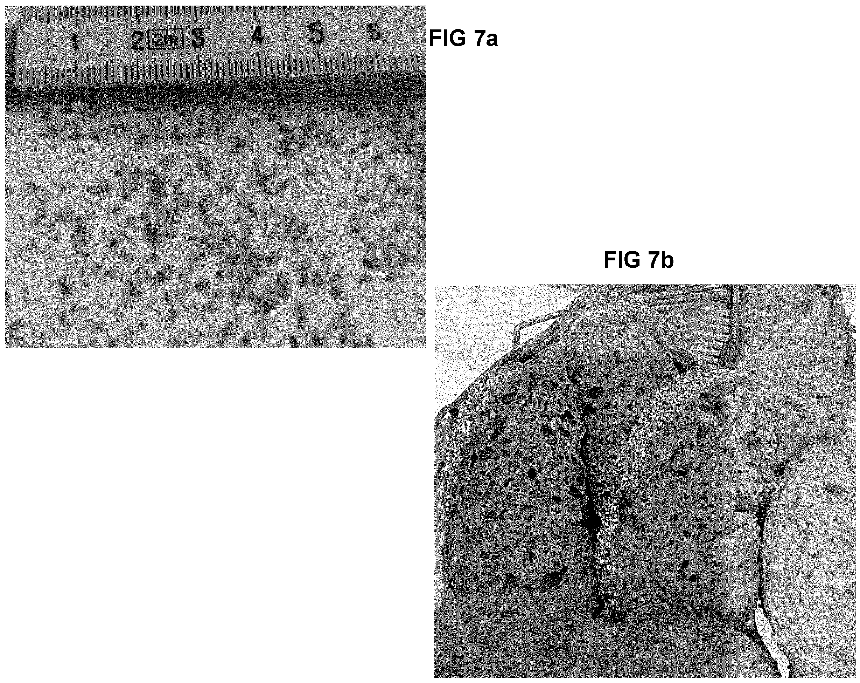

La photo (Fig. 7b) des tranches de pain selon le deuxième exemple illustrent la légèreté de la mie et l'épaisseur de la croûte protectrice.

### Exemple des caractéristiques d'une farine de miettes selon une forme d'execution

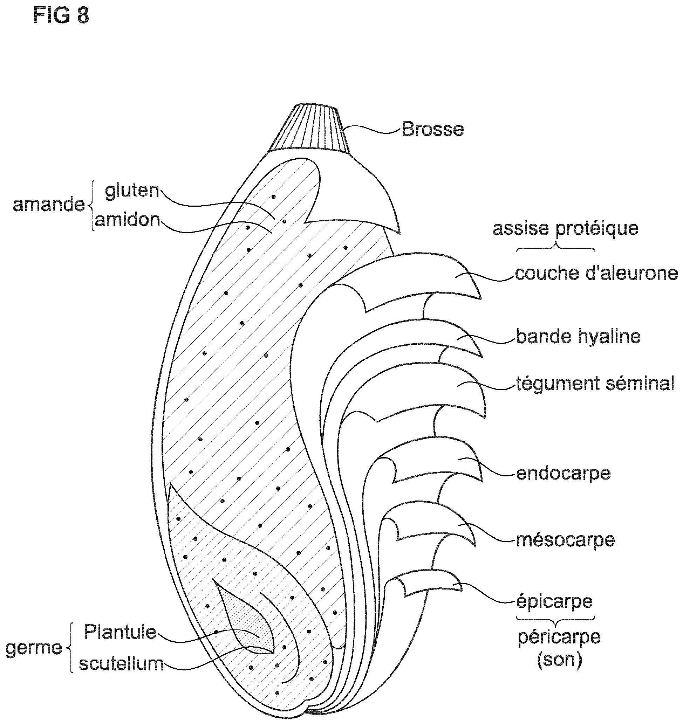

Les grains de blé, d'épeautre et/ou de seigle sont composées d'environ (voir figure 8):
- 85% d'amidon contenu dans l'amande du grain ;
- 6% de son qui est le péricarpe protecteur du grain, sans valeur nutritive, mais utile au transit intestinal;
- 9% d'assises protéiques (aleurone + bande hyaline + tégument séminal + germe), qui contiennent de nombreuses vitamines et compléments alimentaires très utiles à la santé humaine ;
- et enfin
- Le germe ou plantule, qui sont autant de cellules vivantes des grains de végétaux.

Les particules de l'émiettage de blé dur (exemple illustré dans la figure 7a) peuvent varier par exemple de 100 µ à 3 mm. Les plus grosses particules proviennent de l'amande du grain qui résistent à l'émiettage sans pression, contrairement aux moulins traditionnels, et les particules les plus fines sont issues de l'assise protéique variant par exemple de 50 à 150 µm.

Lors de la préparation de cette farine émiettée par ébouillantage à environ 90-100°C, ces cellules absorbent une grande quantité d'eau et gonflent beaucoup plus que les cellules d'amidon. L'oxygène de l'eau arrache les protéines des cellules et développe les arômes et les vertus de ces grains. A la cuisson, les cellules vivantes, déjà endommagées par l'ébouillantage, sont détruites et le pain avec de la farine de miettes selon l'invention et ralentissent le développement de moisissures ou autres altérations, pour augmenter la durée de conservation du pain. De plus, l'humidité supérieure de la mie du pain avec de la farine de miettes selon l'invention, en comparaison d'un pain traditionnel, prolonge avantageusement sa conservation.

### Liste des références dans les figures

### Machine pour moudre des grains (p.ex. de céréales) 1

Cabine 16
Source de gaz neutre (azote) 17
Entrée 19
Sortie 20

### Dispositif d'alimentation 21

Entonnoir 22
Répartiteur doseur 23
   Rouleau de distribution 24
   Cannelures 25

### Dispositif de convoyage 26

Tapis roulant / tapis vibrant 27

### Dispositif d'émiettage 2

Premier rouleau peigne 3
   Axe de rotation A1
   Premières dents 5
      forme effilée
         sommet arrondi 9
      secteur circulaire d'une dent
      secteur circulaire d'espacement
      bord d'attaque 11
      bord de fuite 13
   Espace latéral entre-dents 7
      Forme évasée
      Creux arrondi 15
Deuxième rouleau peigne 4
   Axe de rotation A2
   Deuxièmes dents 6
      forme effilée
         sommet arrondi 10
      secteur circulaire d'une dent
      secteur circulaire d'espacement tangentielle
      bord d'attaque 12
      bord de fuite 14
   Espace entre-dents 8
      Forme évasée
      Creux arrondi 16

### Dispositif de séchage 28

### Grains de céréale 30

Amande (Amidon, Gluten)
   Cellules
Germe
Péricarpe
Assise protéique
Brosse
Miettes 31

### Paramètres

Distance latérale entre dents (pas) ***P***
Largeur de la fente entre rouleaux (entre les dents des rouleaux) ***W***
Diamètre du premier rouleau ***D1***
Diamètre du deuxième rouleau ***D2***
Angle de la forme effilée des dents ***α***
Longueur tangentielle d'une dent du premier rouleau ***T1***
Longueur tangentielle de l'espace entre dents du premier rouleau ***E1***
Longueur tangentielle d'une dent du deuxième rouleau ***T2***
Longueur tangentielle de l'espace entre dents du deuxième rouleau ***E2***
Rayon de l'arrondi du sommet ***R***
Angle du bord d'attaque (par rapport au radial) du premier rouleau ***β1***
Angle du bord de fuite (par rapport au radial) du premier rouleau ***φ1***
Angle du bord d'attaque (par rapport au radial) du deuxième rouleau ***β2***
Angle du bord de fuite (par rapport au radial) du deuxième rouleau ***φ2***
Angle du secteur circulaire d'une dent du premier rouleau ***σ1***
Angle du secteur circulaire de l'espace entre dents du premier rouleau ***w1***
Angle du secteur circulaire d'une dent du deuxième rouleau ***σ2***
Angle du secteur circulaire de l'espace entre dents du deuxième rouleau ***ω2***
Vitesse tangentielle (au diamètre maximal) du premier rouleau ***V1***
Vitesse tangentielle (au diamètre maximal) du deuxième rouleau ***V2***
Rapport de vitesses ***V1*/*V2***

## Revendications

1. **Machine pour moudre des grains (1)** comprenant une pluralité de dispositifs d'émiettage (2), chaque dispositif d'émiettage comprenant un premier rouleau peigne (3) tournant autour d'un premier axe de rotation (A1) et un deuxième rouleau peigne (4) tournant autour d'un deuxième axe de rotation (A2) le premier rouleau peigne comprenant une pluralité de rayons de premières dents (5) faisant le tour de l'axe de rotation (A1) et le deuxième rouleau peigne comprenant une pluralité de rayons de deuxièmes dents (6) faisant le tour du deuxième axe de rotation (A2), les premières et deuxièmes rayons de dents ayant des formes complémentaires et se chevauchant, une largeur (***W***) d'une fente entre les dents des rouleaux étant plus grande que 0, le premier rouleau peigne (3) et le deuxième rouleau peigne (4) étant entrainés en rotation par un ou plusieurs moteurs configurés pour entrainer les premières dents à une vitesse tangentielle (***V1***) plus grande qu'une vitesse tangentielle (***V2***) des deuxièmes dents, le ou les dispositif(s) d'émiettage en amont ayant une largeur de fente (***W***) entre rouleaux plus grande que le ou les dispositif(s) d'émiettage en aval.

2. Machine selon la revendication précédente, **caractérisée en ce que** les premières dents (5) ont une forme effilée, vue en section selon un plan radial, avec un angle de la forme effilée (***α***) dans une gamme de 15 degrés à 45 degrés.

3. Machine selon une des revendications précédentes, **caractérisée en ce que** le sommet des dents a une forme arrondie.

4. Machine selon une des revendications précédentes, **caractérisée en ce qu'**une longueur tangentielle (***T1***) des premières dents entre un bord d'attaque (11) et un bord de fuite (13) est plus grand qu'une longueur tangentielle (***T2***) des deuxièmes dents (6) entre un bord d'attaque (12) et un bord de fuite (14), par exemple le rapport de longueur tangentielle (***T2*/*T1***) des deuxièmes dents (6) par rapport aux premières dents (5) est dans une gamme entre 0,2 et 0,8.

5. Machine selon une des revendications précédentes, **caractérisée en ce que** le premier rouleau peigne (3) est configuré pour tourner à une vitesse tangentielle (***V1***) entre 1 et 5 fois la vitesse tangentielle (***V2***) du deuxième rouleau peigne.

6. Machine selon une des revendications précédentes, **caractérisée en ce que** la première dent du premier rouleau peigne comprend un bord d'attaque (11) incliné par rapport à un radial passant par la base du bord d'attaque dans le sens de rotation du premier rouleau peigne (3), par exemple l'angle d'inclinaison (***β1***) du bord d'attaque par rapport au radial du premier rouleau est entre 5 degrés et 45 degrés, de préférence entre 10° et 35°.

7. Machine selon une des revendications précédentes, **caractérisée en ce que** la deuxième dent (6) du deuxième rouleau peigne comprend un bord de fuite (13) incliné par rapport à un radial passant par la base du bord de fuite dans le sens de rotation du deuxième rouleau peigne (4), par exemple l'angle d'inclinaison (***φ2***) du bord de fuite par rapport au radial du deuxième rouleau est entre 0 degrés et 40 degrés, de préférence entre 5°et 30°.

8. Machine selon une des revendications précédentes, **caractérisée en ce qu'**elle comprend un mécanisme d'ajustement de la distance entre le premier axe de rotation (A1) et le deuxième axe de rotation (A2) de sorte à ajuster la largeur de la fente (***W***) entre les premiers et deuxièmes rouleaux.

9. Machine selon une des revendications précédentes, comprenant des dispositifs de convoyage (26) configurés pour transporter des miettes de grains entre dispositifs d'émiettage, ainsi que du dernier dispositif d'émiettage et une sortie (20) de la machine.

10. Machine selon une des revendications précédentes, **caractérisée en ce qu'**elle comprend une cabine (16) et une source de gaz neutre tel que de l'azote (17) connecté à la cabine (16) la remplissant de gaz neutre, les dispositifs d'émiettage (2) étant disposés dans la cabine (16), et optionnellement la cabine peut être fermée hermétiquement de sorte à pouvoir avoir une sous-pression à l'intérieur de la cabine.

11. Machine selon une des revendications précédentes, **caractérisée en ce qu'**elle comprend un dispositif d'alimentation (21) à l'entrée (19) de la machine, le dispositif d'alimentation comprenant un répartiteur doseur (23) comprenant un rouleau de distribution (24) avec des cannelures (25), le rouleau de distribution (24) entrainé en rotation par un moteur de la machine.

12. Machine selon une des revendications précédentes, **caractérisée en ce qu'**elle comprend au moins un dispositif de séchage (28), par exemple un dispositif de séchage par chaleur de rayonnement et/ou par ventilation des miettes de grains, disposé entre deux dispositifs d'émiettage, et optionnellement, au moins un dispositif de séchage configuré pour la torréfaction des miettes disposé avant la sortie (20) de la machine.

13. Procédé pour moudre des grains de végétaux tels que des céréales utilisant une machine comprenant une pluralité de dispositifs d'émiettage (2), chaque dispositif d'émiettage comprenant un premier rouleau peigne (3) tournant autour d'un premier axe de rotation (A1) et un deuxième rouleau peigne (4) tournant autour d'un deuxième axe de rotation (A2) le premier rouleau peigne comprenant une pluralité de rayons de premières dents (5) faisant le tour de l'axe de rotation (A1) et le deuxième rouleau peigne comprenant une pluralité de rayons de deuxièmes dents (6) faisant le tour du deuxième axe de rotation (A2), les premières et deuxièmes rayons de dents ayant des formes complémentaires et se chevauchant, le premier rouleau peigne (3) et le deuxième rouleau peigne (4) étant entrainés en rotation par un ou plusieurs moteurs configurés pour entrainer les premières dents à une vitesse tangentielle (***V1***) plus grande qu'une vitesse tangentielle (***V2***) des deuxièmes dents, le procédé comprenant une étape d'émiettage des grains entre les premières rayons de dents (5) et les deuxièmes rayons de dents (6) espacées d'une fente ayant une largeur (***W***) plus grande que 0,09mm et plus faible que la taille moyenne des grains configuré pour casser les grains ou les miettes de grains en morceaux par un effet de cisaillement et de pliage, une partie majeure de la surface de rupture n'étant pas sollicitée en frottement contre les dents, le ou les dispositif(s) d'émiettage en amont ayant une largeur de fente (***W***) entre rouleaux plus grande que le ou les dispositif(s) d'émiettage en aval.

14. Procédé selon la revendication précédente dans lequel la machine comprend un ou plusieurs caractéristiques supplémentaires de la machine selon l'une quelconque des revendications 1 à 12 pour émietter les grains.

## Patentansprüche

1. Maschine zum Mahlen von Körnern (1), umfassend eine Vielzahl von Zerbröselungsvorrichtungen (2), wobei jede Zerbröselungsvorrichtung eine erste Kämmwalze (3), die sich um eine erste Drehachse (A1) herum dreht, und eine zweite Kämmwalze (4), die sich um eine zweite Drehachse (A2) herum dreht, umfasst, wobei die erste Kämmwalze eine Vielzahl von Reihen mit ersten Zähnen (5), die um die Drehachse (A1) herum gehen, umfasst, und die zweite Kämmwalze eine Vielzahl von Reihen mit zweiten Zähnen (6), die um die Drehachse (A2) herum gehen, umfasst, wobei die ersten und zweiten Zahnreihen sich ergänzende Formen aufweisen und sich überlappen, wobei eine Breite (W) eines Spalts zwischen den Zähnen der Walzen größer als 0 ist, wobei die erste Kämmwalze (3) und die zweite Kämmwalze (4) durch einen oder mehrere Motoren drehend angetrieben werden, um die ersten Zähne mit einer Tangentialgeschwindigkeit (V1), die größer als eine Tangentialgeschwindigkeit (V2) der zweiten Zähne ist, anzutreiben, wobei die stromaufwärtige(n) Zerbröselungsvorrichtung(en) eine Spaltbreite (W) zwischen den Walzen aufweist/aufweisen, die größer als die der stromabwärtigen Zerbröselungsvorrichtung(en) ist.

2. Maschine nach dem vorhergehenden Anspruch, **dadurch gekennzeichnet, dass** die ersten Zähne (5) eine spitz zulaufende Form aufweisen, wenn sie entlang einer radialen Ebene im Schnitt gesehen werden, wobei ein Winkel der spitz zu laufenden Form (α) in einem Bereich von 15 Grad bis 45 Grad liegt.

3. Maschine nach einem der vorhergehenden Ansprüche, **dadurch gekennzeichnet, dass** die Spitze der Zähne eine abgerundete Form aufweist.

4. Maschine nach einem der vorhergehenden Ansprüche, **dadurch gekennzeichnet, dass** eine Tangentiallänge (T1) der ersten Zähne zwischen einer Vorderkante (11) und einer Hinterkante (13) größer als eine Tangentiallänge (T2) der zweiten Zähne (6) zwischen einer Vorderkante (12) und einer Hinterkante (14) ist, zum Beispiel das Verhältnis der Tangentiallänge (T2/T1) der zweiten Zähne (6) zu den ersten Zähnen (5) in einem Bereich zwischen 0,2 und 0,8 liegt.

5. Maschine nach einem der vorhergehenden Ansprüche, **dadurch gekennzeichnet, dass** die erste Kämmwalze (3) dazu konfiguriert ist, sich mit einer Tangentialgeschwindigkeit (V1) zwischen 1- und 5-mal die Tangentialgeschwindigkeit (V2) der zweiten Kämmwalze zu drehen.

6. Maschine nach einem der vorhergehenden Ansprüche, **dadurch gekennzeichnet, dass** der erste Zahn der ersten Kämmwalze eine Vorderkante (11) umfasst, die im Verhältnis zu einer Radialen, die durch die Basis der Vorderkante geht, in einer Drehrichtung der ersten Kämmwalze (3) geneigt ist, zum Beispiel der Neigungswinkel (β1) der Vorderkante im Verhältnis zu der Radialen der ersten Walze zwischen 5 Grad und 45 Grad, bevorzugt zwischen 10° und 35° liegt.

7. Maschine nach einem der vorhergehenden Ansprüche, **dadurch gekennzeichnet, dass** der zweite Zahn (6) der zweiten Kämmwalze eine Hinterkante (13) umfasst, die im Verhältnis zu einer Radialen, die durch die Basis der Hinterkante geht, in der Drehrichtung der zweiten Kämmwalze (4) geneigt ist, zum Beispiel der Neigungswinkel (φ2) der Hinterkante im Verhältnis zu der Radialen der zweiten Walze zwischen 0 Grad und 40 Grad, bevorzugt zwischen 5° und 30° liegt.

8. Maschine nach einem der vorhergehenden Ansprüche, **dadurch gekennzeichnet, dass** sie einen Mechanismus zum Anpassen des Abstands zwischen der ersten Drehachse (A1) und der zweiten Drehachse (A2) umfasst, um die Breite des Spalts (W) zwischen der ersten und der zweiten Walze anzupassen.

9. Maschine nach einem der vorhergehenden Ansprüche, umfassend Fördervorrichtungen (26), die dazu konfiguriert sind, Getreidebrösel zwischen Zerbröselungsvorrichtungen, sowie von der letzten Zerbröselungsvorrichtung und einem Ausgang (20) der Maschine zu transportieren.

10. Maschine nach einem der vorhergehenden Ansprüche, **dadurch gekennzeichnet, dass** sie eine Kabine (16) und eine Quelle von Neutralgas, wie etwa Stickstoff (17), umfasst, die mit der Kabine (16) verbunden ist, und diese mit Neutralgas füllt, wobei die Zerbröselungsvorrichtungen (2) in der Kabine (16) angeordnet sind, und wahlweise die Kabine hermetisch geschlossen werden kann, so dass innerhalb der Kabine ein Unterdruck vorhanden sein kann.

11. Maschine nach einem der vorhergehenden Ansprüche, **dadurch gekennzeichnet, dass** sie eine Versorgungsvorrichtung (21) am Eingang (19) der Maschine umfasst, wobei die Versorgungsvorrichtung einen Dosierverteiler (23) umfasst, der eine Verteilerwalze (24) mit Rillen (25) umfasst, wobei die Verteilerwalze (24) von einem Motor der Maschine drehend angetrieben wird.

12. Maschine nach einem der vorhergehenden Ansprüche, **dadurch gekennzeichnet, dass** sie mindestens eine Trockenvorrichtung (28), zum Beispiel eine Vorrichtung zum Trocknen durch Strahlungswärme und/oder durch Belüftung der Getreidebrösel, die zwischen zwei Zerbröselungsvorrichtungen angeordnet ist, und wahlweise mindestens eine Trockenvorrichtung, die zum Rösten der Brösel konfiguriert ist, die vor dem Ausgang (20) der Maschine angeordnet ist, umfasst.

13. Verfahren zum Mahlen von Pflanzenkörnern, wie etwa Getreide, unter Verwendung einer Maschine, die eine Vielzahl von Zerbröselungsvorrichtungen (2) umfasst, wobei jede Zerbröselungsvorrichtung eine erste Kämmwalze (3), die sich um eine erste Drehachse (A1) herum dreht, und eine zweite Kämmwalze (4), die sich um eine zweite Drehachse (A2) herum dreht, umfasst, wobei die erste Kämmwalze eine Vielzahl von Reihen mit ersten Zähnen (5), die um die Drehachse (A1) herum gehen, umfasst, und die zweite Kämmwalze eine Vielzahl von Reihen mit zweiten Zähnen (6), die um die Drehachse (A2) herum gehen, umfasst, wobei die ersten und zweiten Zahnreihen sich ergänzende Formen aufweisen und sich überlappen, wobei die erste Kämmwalze (3) und die zweite Kämmwalze (4) von einem oder mehreren Motoren drehend angetrieben werden, die dazu konfiguriert sind, die erste Zähne mit einer Tangentialgeschwindigkeit (V1) anzutreiben, die größer als eine Tangentialgeschwindigkeit (V2) der zweiten Zähne ist, wobei das Verfahren einen Schritt des Zerbröselns der Körner zwischen den ersten Zahnreihen (5) und den zweiten Zahnreihen (6) umfasst, die um einen Spalt mit einer Breite (W) beabstandet sind, die größer als 0,09 mm und geringer als die durchschnittliche Größe der Körner ist, der dazu konfiguriert ist, die Körner oder die Körnerbrösel durch eine Scher- und Faltwirkung zu zerstückeln, wobei ein Großteil der Bruchfläche keiner Reibung an den Zähnen unterzogen wird, wobei die stromaufwärtige(n) Zerbröselungsvorrichtung(en) eine Spaltbreite (W) zwischen den Walzen aufweisen, die größer als die der stromabwärtigen Zerbröselungsvorrichtung(en) ist.

14. Verfahren nach dem vorhergehenden Anspruch, wobei die Maschine ein oder mehrere zusätzliche Kennzeichen der Maschine nach einem der Ansprüche 1 bis 12 umfasst, um die Körner zu zerbröseln.

## Claims

1. A grain-grinding machine (1) comprising a plurality of fragmentation devices (2), each fragmentation device comprising a first comb roller (3) rotating about a first axis of rotation (A1) and a second comb roller (4) rotating about a second axis of rotation (A2), the first comb roller comprising a plurality of rows of first teeth (5) revolving around the axis of rotation (A1) and the second comb roller comprising a plurality of rows of second teeth (6) revolving around the second axis of rotation (A2), the first and second tooth rows having complementary and overlapping shapes, a width (*W*) of a slot between the teeth of the rollers being greater than 0, the first comb roller (3) and the second comb roller (4) being driven in rotation by one or more motors configured to drive the first teeth at a tangential speed (*V1*) greater than a tangential speed (*V2*) of the second teeth, the upstream fragmentation device(s) having a slot width (*W*) between rollers greater than the downstream fragmentation device(s).

2. The machine according to the preceding claim, **characterized in that** the first teeth (5) have a tapered shape, viewed in section along a radial plane, with an angle of the tapered shape (*α*) ranging from 15 degrees to 45 degrees.

3. The machine according to any of the preceding claims, **characterized in that** the tip of the teeth has a rounded shape.

4. The machine according to any of the preceding claims, **characterized in that** a tangential length (*T1*) of the first teeth between a leading edge (11) and a trailing edge (13) is greater than a tangential length (*T2*) of the second teeth (6) between a leading edge (12) and a trailing edge (14), for example the tangential length ratio (*T2*/*T1*) of the second teeth (6) relative to the first teeth (5) is ranging between 0.2 and 0.8.

5. The machine according to any of the preceding claims, **characterized in that** the first comb roller (3) is configured to rotate at a tangential speed (*V1*) between 1 and 5 times the tangential speed (*V2*) of the second comb roller.

6. The machine according to any of the preceding claims, **characterized in that** the first tooth of the first comb roller comprises a leading edge (11) inclined with respect to a radial passing through the base of the leading edge in the direction of rotation of the first comb roller (3), for example the angle of inclination (*β1*) of the leading edge with respect to the radial of the first roller is between 5 degrees and 45 degrees, preferably between 10° and 35°.

7. The machine according to any of the preceding claims, **characterized in that** the second tooth (6) of the second comb roller comprises a trailing edge (13) inclined with respect to a radial passing through the base of the trailing edge in the direction of rotation of the second comb roller (4), for example the angle of inclination (*φ2*) of the trailing edge with respect to the radial of the second roller is between 0 degrees and 40 degrees, preferably between 5° and 30°.

8. The machine according to any of the preceding claims, **characterized in that** it comprises a mechanism for adjusting the distance between the first axis of rotation (A1) and the second axis of rotation (A2) so as to adjust the width of the gap (*W*) between the first and second rollers.

9. The machine according to any of the preceding claims, comprising conveying devices (26) configured to transport grain crumbs between fragmentation devices, as well as from the last fragmentation device, and an outlet (20) of the machine.

10. The machine according to any of the preceding claims, **characterized in that** it comprises a cabin (16) and a neutral gas source such as nitrogen (17) connected to the cabin (16) and filling it with neutral gas, the fragmentation devices (2) being disposed in the cabin (16), and optionally the cabin can be hermetically closed so as to be able to have an under-pressure inside the cabin.

11. The machine according to any of the preceding claims, **characterized in that** it comprises a feeding device (21) at the inlet (19) of the machine, the feeding device comprising a metering distributor (23) comprising a distribution roller (24) with splines (25), the distribution roller (24) being driven in rotation by a motor of the machine.

12. The machine according to any of the preceding claims, **characterized in that** it comprises at least one drying device (28), for example a device for drying grain crumbs by radiation heat and/or by ventilation, disposed between two fragmentation devices and, optionally, at least one drying device configured for roasting the crumbs disposed before the outlet (20) of the machine.

13. A method for grinding plant grains such as cereals using a machine comprising a plurality of fragmentation devices (2), each fragmentation device comprising a first comb roller (3) rotating about a first axis of rotation (A1) and a second comb roller (4) rotating about a second axis of rotation (A2), the first comb roller comprising a plurality of rows of first teeth (5) revolving around the axis of rotation (A1) and the second comb roller comprising a plurality of rows of second teeth (6) revolving around the second axis of rotation (A2), the first and second tooth rows having complementary shapes and overlapping, the first comb roller (3) and the second comb roller (4) being driven in rotation by one or several motors configured to drive the first teeth at a tangential speed (*V1*) greater than a tangential speed (*V2*) of the second teeth, the method comprising a step of fragmenting the grains between the first tooth row (5) and the second tooth row (6) spaced by a slot having a width (*W*) greater than 0.09 mm and smaller than the average grain size, configured to break the grains or the grain crumbs into pieces by a shearing and folding effect, a major part of the breaking surface not being subjected to friction against the teeth, the upstream fragmentation device(s) having a slot width (*W*) between rollers greater than that of the downstream fragmentation device(s).

14. The method according to the preceding claim, wherein the machine comprises one or more additional characteristics of the machine according to any one of claims 1 to 12 for fragmenting the grains.
